# FASCICULE DE BREVET EUROPEEN

(11) **EP 1 917 180 B1**
(45) Date de publication et mention de la délivrance du brevet: **30.12.2009**
(21) Numéro de dépôt: 06794309.2
(22) Date de dépôt: 08.08.2006
(51) Int. Cl.: B63B 1/00, B63B 1/04, B63B 1/06, B63B 1/08, B63B 1/24, B63B 39/00, B63B 13/02

(54) **COQUE DE NAVIRE COMPORTANT AU MOINS UN FLOTTEUR**
SCHIFFSRUMPF MIT MINDESTENS EINEM SCHWIMMER
SHIP HULL PROVIDED WITH AT LEAST ONE FLOAT

(30) Priorité: 26.08.2005 FR 0508788
(43) Date de publication de la demande: 07.05.2008
(73) Titulaire: DCNS, 75015 Paris (FR)
(72) Inventeur: GOUBAULT, Philippe, F-56100 Lorient (FR); FUMERY, Benoît, F-56530 Queven (FR)
(74) Mandataire: Domenego, Bertrand
(86) Numéro de dépôt international: PCT/FR2006/001926
(87) Numéro de publication internationale: WO 2007/023215

(56) Documents cités:
- JP-A- 61 046 786
- US-A- 5 937 777
- US-A1- 2005 126 464
- US-B1- 6 708 642

## Description

La présente invention est relative à une coque de navire comportant au moins un flotteur.

Le document US 5 937 777 décrit une coque de navire comportant au moins un flotteur.

Les coques de navire sont caractérisées notamment par le centre de flottaison qui est le barycentre du plan de flottaison, le plan de flottaison étant la surface définie par l'interception de la coque du navire et du plan correspondant à la ligne de flottaison, et par la position du centre de carène qui est le barycentre de la carène, c'est-à-dire du volume de la coque situé en dessous du plan de flottaison. Le comportement à la mer d'un navire est notamment lié aux positions relatives du centre de flottaison et du centre de carène.

Dans un navire, en général, le centre de flottaison et le centre de carène sont sensiblement à la verticale l'un de l'autre. Plus précisément, et pour définir les caractéristiques d'une coque de navire, on considère d'une part, la longueur du centre de flottaison qui est la distance qui sépare l'arrière du plan de flottaison et le centre de flottaison, et d'autre part la longueur du centre de carène qui est la distance qui sépare l'arrière du plan de flottaison et le centre de carène (longueur du centre de flottaison : LCF, longueur du centre de carène : LCB).

L'essentiel des navires existants sont conçus de façon à ce que le rapport de la longueur du centre de flottaison à la longueur du centre de carène soit compris entre 0,85 et 1, certains navires atteignent exceptionnellement la valeur de 1,05.

Une telle conception des coques de navire a l'avantage de permettre de bien charger les navires, mais l'inconvénient de conduire à des navires ayant une faible rigidité au tangage, c'est-à-dire des navires fortement sensibles à la houle venant de face.

Afin de remédier à cet inconvénient et d'obtenir un navire ayant une bonne rigidité au tangage, on a proposé de réaliser des coques dont le centre de carène est avancé vers la partie avant du navire, et le centre de flottaison est sensiblement reculé vers l'arrière. On obtient ainsi des coques dont le rapport de la longueur du centre de carène à la longueur du centre de flottaison est de l'ordre de 0,7. Ces caractéristiques de la coque sont obtenues avec une carène qui est constituée notamment d'un bulbe à l'avant très important et une partie arrière du plan de flottaison relativement importante alors que la partie avant du plan de flottaison est effilée. De tels navires ont l'avantage d'avoir une très bonne rigidité au tangage, mais l'inconvénient de ne pas pouvoir emporter des charges très importantes. En effet, les zones du navire qui sont en regard des masses ou des volumes immergés les plus importants se trouvent dans les parties avant effilées du navire donc laissant peu de place pour implanter des installations sur le navire.

Le but de la présente invention est de remédier à ces inconvénients en proposant un navire ayant une très bonne rigidité au tangage tout en offrant de larges possibilités d'aménagement des superstructures.

A cet effet, un objet de la présente invention est la réalisation d'une coque de navire comportant au moins un flotteur, dont le centre de carène de la coque est en arrière du centre de flottaison de la coque, et la distance entre le centre de carène et le centre de flottaison est supérieur à 0,05 fois la longueur de flottaison de la coque, la longueur de flottaison étant la longueur totale du plan de flottaison. Pour un tel flotteur, le rapport entre la longueur du centre de flottaison et la longueur du centre de carène peut excéder 1,1.

Suivant des modes particuliers de réalisation, la coque peut comporter une ou plusieurs des caractéristiques suivantes :
- le centre de carène de la coque est situé au droit de la moitié arrière du plan de flottaison de la coque, et le centre de flottaison de la coque est situé dans la moitié avant du plan de flottaison ;
- elle comprend au moins un flotteur principal dont le plan de flottaison comporte une partie large à l'avant et une partie effilée à l'arrière de telle sorte que le centre de flottaison correspondant est situé dans la moitié avant du plan de flottaison, et dont la carène comporte un avant effilé et au moins un bulbe arrière, de telle sorte que le centre de carène du flotteur principal est situé au droit de la moitié arrière du plan de flottaison ;
- la carène d'au moins un flotteur principal comporte deux bulbes arrière parallèles entre eux ;
- elle comprend deux flotteurs principaux parallèles entre eux ;
- elle comprend, en outre, au moins deux flotteurs de stabilisation latéraux ;
- chaque flotteur latéral comporte une partie immergée située dans la moitié arrière du navire ;
- chaque flotteur latéral comporte une quille qui s'étend vers l'avant de la coque au dessus de la ligne de flottaison, sur au moins les deux tiers de la longueur de la coque, et la longueur de la partie immergée du flotteur latéral est inférieure à la moitié de la longueur total du flotteur latéral ;
- au moins un flotteur latéral comprend, en outre, une aile portante ;
- elle comporte des parois latérales externes dont au moins les parties situées au-dessus de la ligne de flottaison sont inclinées vers l'intérieur de façon que leurs surfaces extérieures soient orientées vers le haut, l'angle d'inclinaison desdites parois par rapport à la verticale étant supérieur à 20° ; et
- elle est constituée de matériaux composites.

Un autre objet de la présente invention est un navire qui comporte une coque conforme à l'invention. Ce navire peut comporter une ou plusieurs des caractéristiques suivantes :
- sa carène comporte au moins un flotteur principal comportant au moins un bulbe arrière dont l'extrémité arrière porte au moins un moyen de propulsion ;
- il comprend au moins deux moyens de propulsion constitués par deux hélices contra rotatives ;
- il comporte au moins deux flotteurs parallèles entre eux délimitant un tunnel, et il comporte au moins un moyen de production d'énergie générant un gaz d'échappement, évacué dans le tunnel délimité par les deux flotteurs et au moins partiellement confiné dans ledit tunnel par au moins un rideau d'eau ;
- il comporte des super structures constituées de parois inclinées vers l'intérieur pour que leurs faces externes soient orientées vers le haut, avec un angle supérieur à 30° ;
- tous les équipements destinés à être utilisés au dessus de la ligne de flottaison peuvent être dissimulés sous la paroi des super structures ;
- il comporte des moyens pour générer un brouillard d'eau enveloppant ses superstructures ;
- il comporte au moins un flotteur latéral dont au moins une partie constitue un ballast ; et
- il est à usage militaire.

L'invention va maintenant être décrite de façon plus précise mais non limitative en regard des figures annexées dans lesquelles :
- la figure 1 est une vue schématique de profil d'un navire dont la coque a une très bonne rigidité en tangage ;
- les figures 2A, 2B et 2C sont des coupes de la coque du navire de la figure 1 par les plans horizontaux IIA, IIB et IIC, et les figures 2D, 2E et 2F sont des coupes de la coque du navire de la figure 1 par les plans verticaux IID, IIE et IIF ;
- les figures 3A, 3B, 3C et 3D sont des vues en coupe par des plans horizontaux et verticaux de la coque d'un navire du type de celui qui est représenté à la figure 1 mais comportant une coque du type trimaran ;
- la figure 4 est une vue schématique de la partie arrière de la coque d'un navire comportant un bulbe et montrant les moyens de propulsion du navire;
- la figure 5 est une vue en perspective par le dessous d'une coque de navire du type trimaran ayant une bonne rigidité au tangage et permettant de recevoir des superstructures importantes ;
- les figures 6A et 6B sont des vues correspondant à des coupes par des plans horizontaux et des plans verticaux de la coque d'un navire du type trimaran ;
- les figures 7A et 7B sont des vues correspondant à des coupes par des plans horizontaux et verticaux d'une variante de la coque d'un navire du type trimaran ;
- les figures 8A et 8B sont des vues de face et de dos d'un navire du type trimaran ;
- les figures 9A et 9B sont des vues représentant des moyens de camouflage des gaz d'échappement des moyens de propulsion d'un navire trimaran ;
- la figure 10 est une vue schématique de profil d'un navire comportant des moyens de camouflage par des buses diffusant un brouillard d'eau ; et
- la figure 11 est une vue en coupe schématique d'un navire de type trimaran ayant une bonne rigidité au tangage et une grande capacité d'aménagement des superstructures, montrant un mode particulier d'aménagement du navire.

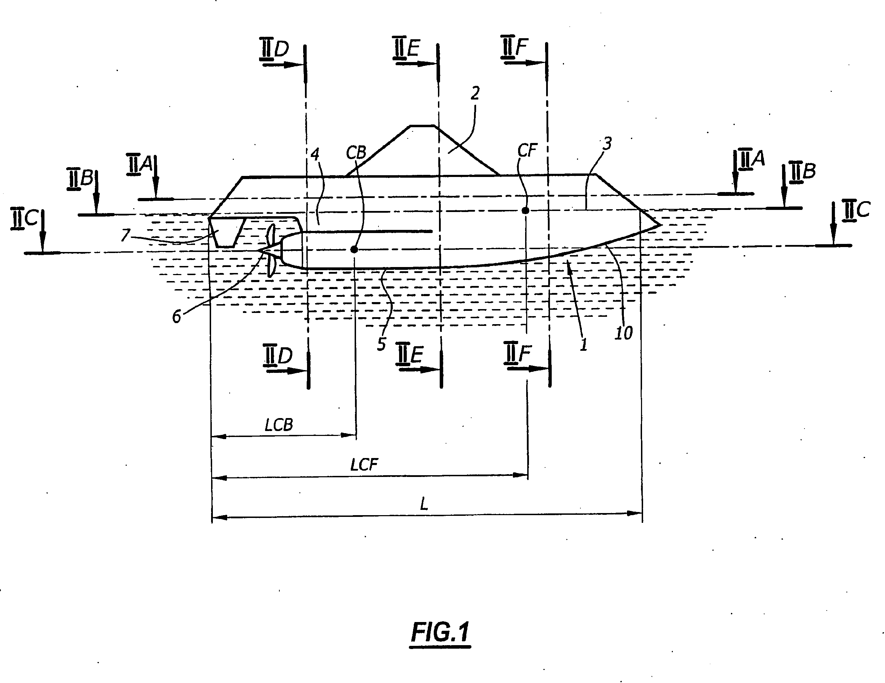

Le navire monocoque représenté schématiquement à la figure 1 comporte une coque 1 et des superstructures 2. La coque 1, qui constitue un flotteur principal 10, comporte un avant 3 effilé et sous la ligne de flottaison représentée par le plan BB, un bulbe 5 s'étendant vers l'arrière et relié à la partie supérieure de la coque par un voile 4 qui constitue une quille. Le bulbe 5 porte à la partie arrière une hélice de propulsion 6, et l'arrière de la coque porte un safran 7.

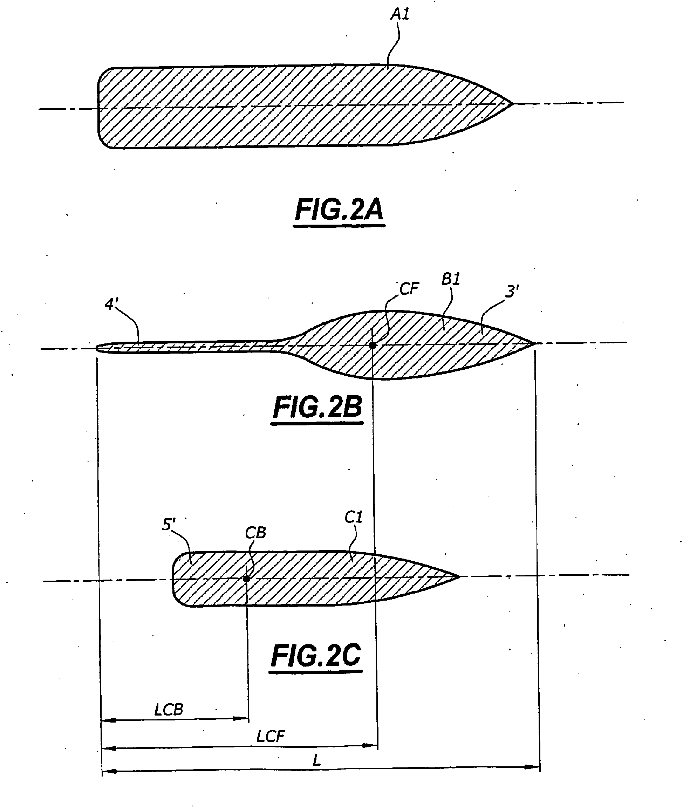

Comme on peut le voir sur la figure 2B, la section de la coque par le plan BB qui constitue, par définition, le plan de flottaison B1 comporte une partie avant ventrue 3' et une partie de liaison arrière 4' très effilée. Le point CF, qui est le barycentre du plan de flottaison et qui correspond au centre de flottaison, se situe dans la partie ventrue à l'avant, à une distance LCF de l'arrière du plan de flottaison. Par définition, LCF est la longueur du centre de flottaison de la coque.

La longueur totale L du plan de flottaison B1, appelée longueur de flottaison, est la longueur qui s'étend depuis la partie effilée 4' située à l'arrière jusqu'à la pointe avant de la partie ventrue 3' du plan de flottaison.

Comme le montre la figure 2C, une section C1 par un plan CC située dans la partie inférieure de la coque et à peu près à mi-hauteur du bulbe 5, a une forme qui correspond à une partie un peu large à l'arrière et qui est effilée vers l'avant. Sur cette figure, on a représenté le centre de carène CB qui correspond au barycentre de la carène c'est-à-dire la partie immergée de la coque du navire, et qui se trouve à peu près au niveau du bulbe arrière, dans la moitié arrière du navire. Le centre de carène CB est à une distance LCB de l'arrière du plan de flottaison B1. Par définition, LCB est la longueur du centre de carène de la coque.

Enfin, une coupe par un plan horizontal AA situé au-dessus de la ligne de flottaison montre une forme A1 représentée à la figure 2A qui est une forme classique de coque de navire comportant une partie effilée vers l'avant, l'essentiel du corps de la coque étant de largeur à peu près constante jusqu'à l'arrière.

Comme on peut le voir sur la figure, le centre de flottaison est situé dans la moitié avant du navire et le centre de carène est situé dans la moitié arrière, et l'écart entre la longueur du centre de flottaison et la longueur du centre de carène est très supérieure à 5% de la longueur L totale du plan de flottaison.

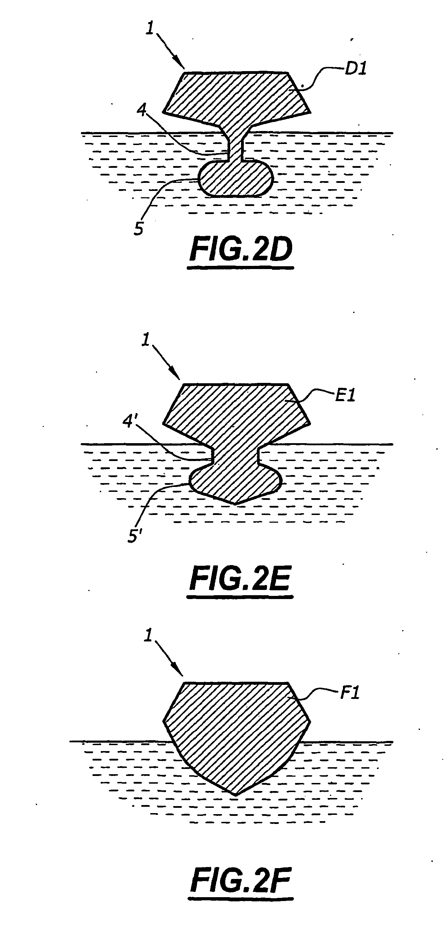

Comme on peut le voir sur les figures 2D, 2E et 2F qui représentent des coupes par des plans verticaux transversaux, la coupe arrière D1 correspondant au plan de coupe DD présente, dans sa carène, un élément de bulbe 5 qui est relié par un voile mince ou quille 4 à la partie supérieure de la coque.

Comme on le voit par la coupe E1 située à peu près à mi-longueur du navire, distance qui correspond au raccordement entre la partie avant et la partie arrière, le bulbe 5 est relié à la partie supérieure de la coque par une partie 4' de la quille 4 qui commence à s'élargir.

Enfin la coupe située vers la partie avant F1, montre une section de carène en forme de V classique.

Avec une telle disposition des volumes dans la carène, le navire a d'abord une très grande rigidité en tangage. En effet, cette rigidité résulte du bras de levier correspondant à la distance entre le centre de flottaison et le centre de carène. Plus la distance entre le centre de flottaison et le centre de carène est importante, plus le navire est rigide en tangage, c'est-à-dire plus son assiette reste horizontale lorsqu'il est face à une houle importante. Avec la coque qui vient d'être décrite, l'écart entre la longueur du centre de flottaison LCF et la longueur centre de carène LCB peut être ajusté pour être supérieur à 5% de la longueur L de flottaison, de préférence supérieur à 15% et mieux supérieur à 20%.

Par ailleurs, du fait de la position du centre de carène vers l'arrière, c'est-à-dire dans une zone qui permet d'avoir une largeur de coque relativement importante, le navire peut comporter des superstructures importantes, au moins dans les 2/3 situés vers l'arrière de la coque. Cette caractéristique est une différence importante par rapport aux navires à forte rigidité au tangage connus dont la partie aménageable est la partie avant puisque, pour ces navires, le centre de carène est situé à l'avant. Or la partie avant est effilée. De ce fait, il est difficile d'implanter des superstructures importantes sur ces navires connus.

Le navire monocoque qui vient d'être décrit comporte dans son plan de flottaison une partie avant 3 relativement ventrue nécessaire pour obtenir une bonne stabilité en roulis. Ceci peut avoir l'inconvénient d'augmenter la résistance à l'avancement du navire et par conséquent de nécessiter une motorisation importante.

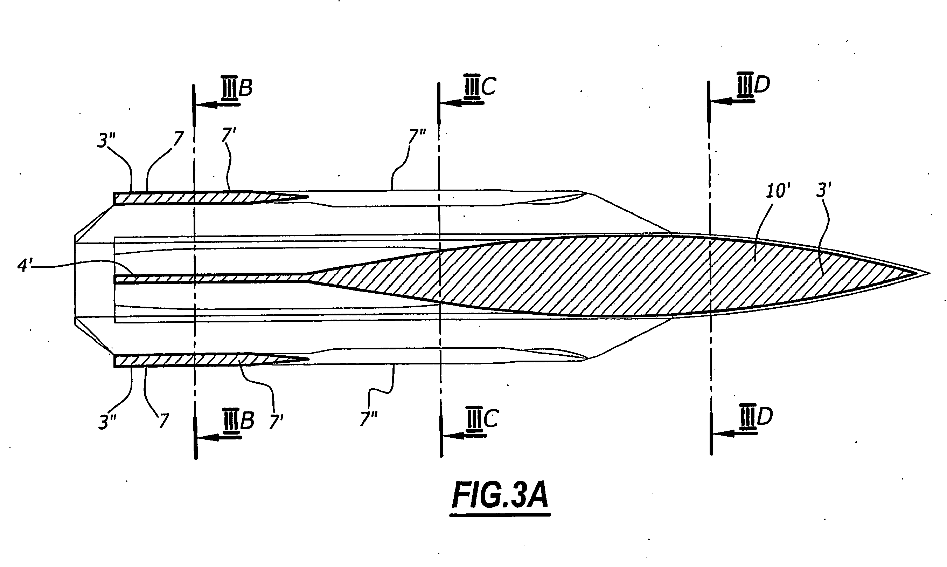

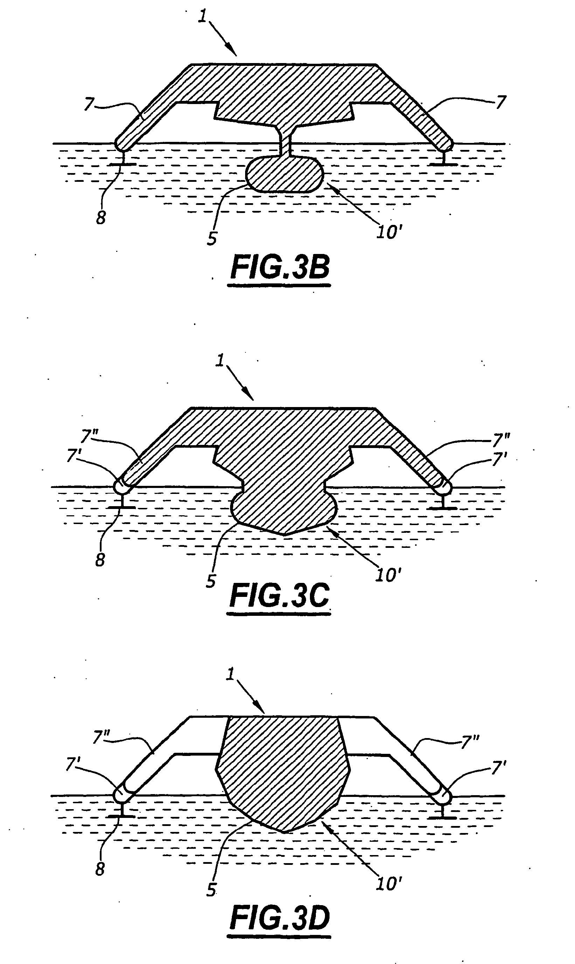

Afin d'améliorer ou de réduire la résistance à l'avancement du navire, il est possible de réaliser une coque selon un deuxième mode de réalisation représenté aux figures 3A, 3B, 3C et 3D. Dans ce mode de réalisation, la coque est de type trimaran. Elle comporte un flotteur principal 10', semblable à celui du mode de réalisation précédent, situé dans son axe et complété de chaque côté par des flotteurs de stabilisation latéraux 7. Le plan de flottaison comporte une partie centrale principale ayant une partie avant ventrue 3' et une partie arrière effilée 4', et deux parties séparées 3" correspondant à l'intersection des flotteurs de stabilisation latéraux 7 avec le plan de flottaison. Comme on peut le voir sur la figure, la partie avant 3' du plan de flottaison est plus effilée que dans le mode de réalisation décrit précédemment. En effet, il n'est pas nécessaire d'avoir un plan de flottaison large à l'avant pour assurer une bonne stabilité au roulis du navire puisque cette stabilité est assurée par les flotteurs latéraux 7 et donc par les éléments du plan de flottaison 3" correspondant à l'intersection de ces flotteurs avec le plan correspondant à la ligne de flottaison. Comme on peut le voir sur la figure 3B, les flotteurs latéraux 7 constituent pour l'essentiel des quilles comportant deux parties. Une partie arrière 7' suffisamment profonde pour avoir l'extrémité qui pénètre dans l'eau et se termine sous le plan de flottaison lorsque la navire est en position normale, et qui comporte éventuellement des ailes de stabilisation 8, et une partie 7" qui s'étend vers l'avant du navire et dont l'extrémité se trouve au-dessus de la ligne de flottaison de sorte que, lorsque le navire est bien horizontal, seule la partie arrière 7' des flotteurs latéraux pénètre dans l'eau et assure la stabilité du navire, la partie avant de la quille 7" restant au-dessus du niveau de l'eau. La partie arrière 7' s'étend sur à peu près le tiers arrière de la coque du navire, alors que la quille qui correspond aux flotteurs s'étend sur à peu près les 2/3 arrière de la coque du navire.

Avec une telle structure de coque, le navire peut avoir à la fois les qualités de rigidité en tangage, de capacité à emporter des superstructures importantes, de stabilité en roulis et enfin, avoir une résistance à l'avancement pas trop importante, ce qui lui permet de se déplacer à des vitesses élevées.

Dans les deux modes de réalisation qui viennent d'être décrits, les moyens de propulsion 6 du navire sont situés à l'arrière en extrémité du bulbe 5.

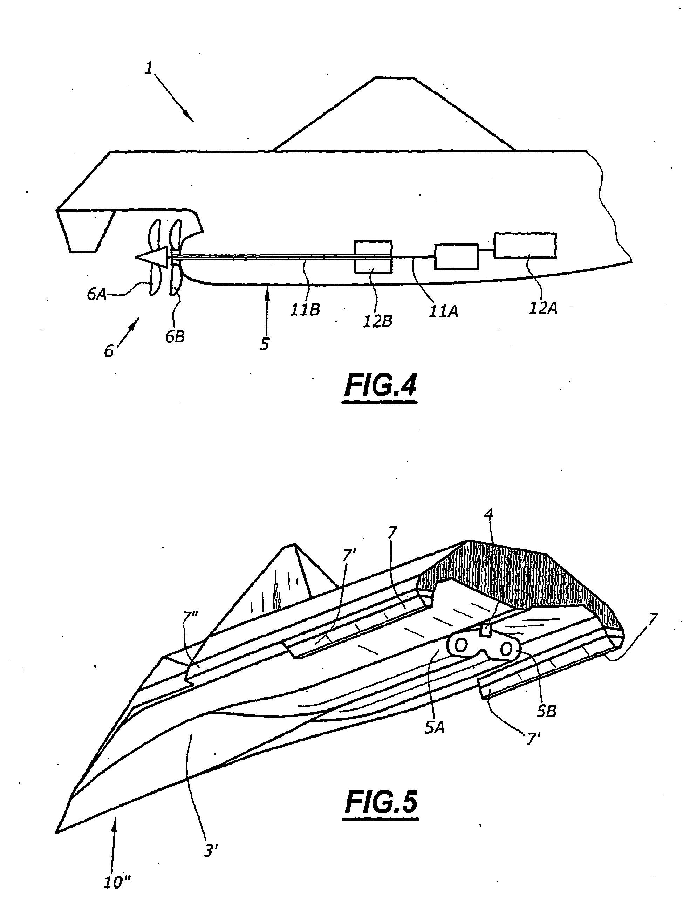

Comme on l'a représenté à la figure 4, ces moyens de propulsion, repérés généralement par 6, sont situés à l'extrémité du bulbe 5, et de préférence, sont constitués de deux hélices contra rotatives 6A et 6B portées par des arbres concentriques 11A et 11 B entraînés par des moyens d'entraînement 12A et 12B connus en eux-mêmes. Ces moyens d'entraînement 12A et 12B sont, par exemple, des moteurs électriques alimentés en électricité par une source de puissance située ailleurs dans le navire.

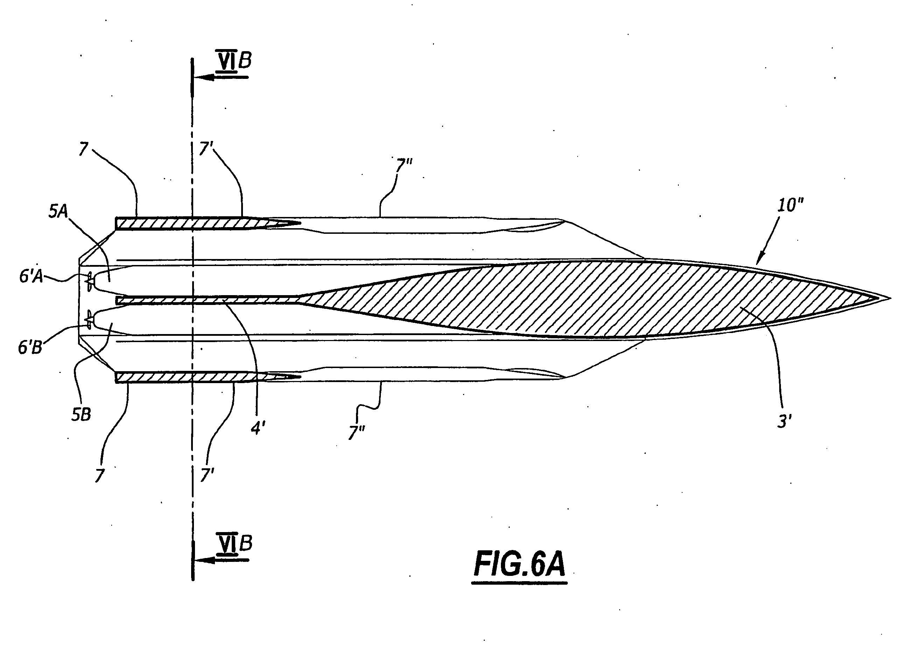

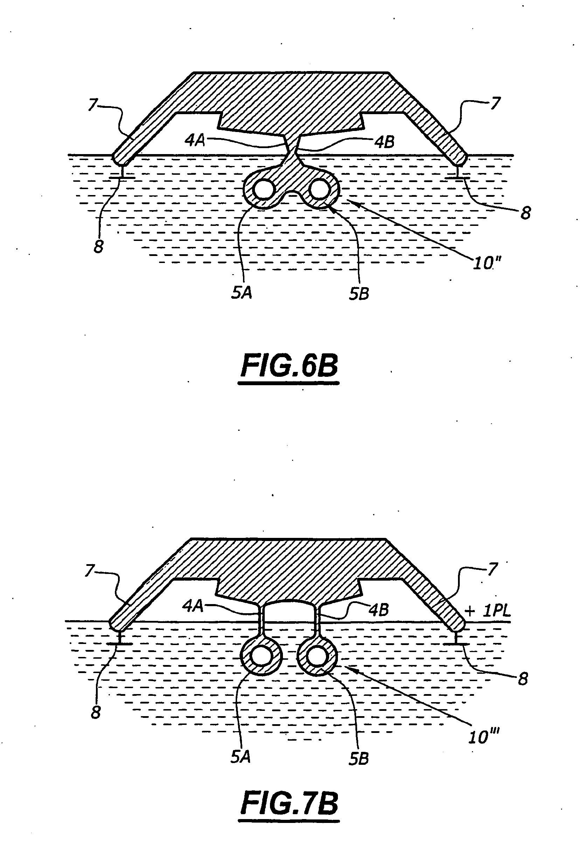

Dans une troisième variante représentée aux figures 6A et 6B, les coques du type trimaran comportent un flotteur principal 10" et deux flotteurs de stabilisation latéraux 7. Cette coque a un plan de flottaison comportant une partie ventrue à l'avant 3' prolongée vers l'arrière par une partie effilée 4' et comportant deux parties 7' correspondant aux parties immergées des flotteurs de stabilisation latéraux 7. Dans cette variante, la partie inférieure de la carène comporte deux bulbes à l'arrière, 5A et 5B, parallèles entre eux et reliés au reste de la coque par une quille correspondant à la partie effilée 4'. Chacun de ces bulbes porte une hélice de propulsion 6'A et 6'B. Les deux hélices pouvant être contra rotatives, sont portées par deux arbres parallèles entraînés par des moyens d'entraînement distincts. Cette disposition a l'avantage de faciliter l'implantation des moyens de propulsion contra rotatifs.

Ce mode de réalisation est représenté à la figure 5 en perspective vu de dessous. Sur cette figure, on voit la partie avant 3', qui se prolonge vers l'arrière par les deux bulbes parallèles 5A et 5B, reliés à la partie supérieure de la coque par la quille effilée 4, et qui comporte de chaque côté du flotteur principal 10" constitué par la partie avant large 3' et des bulbes arrière 5A et 5B, des flotteurs de stabilisation latéraux 7 constitués par une quille comportant des parties arrière 7' s'étendant en dessous de la ligne de flottaison et des parties avant 7" s'étendant au-dessus de la ligne de flottaison.

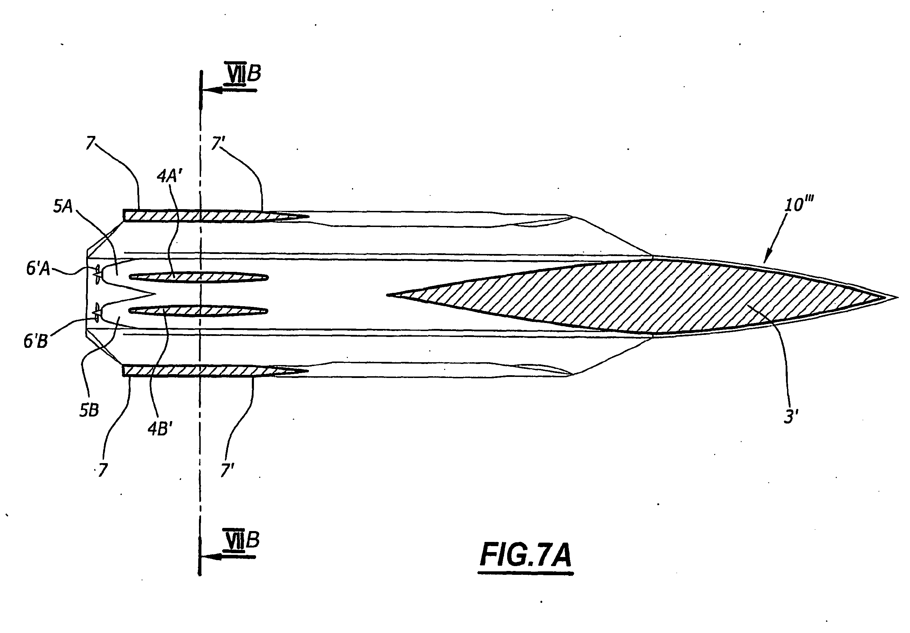

Dans une variante représentée à la figure 7A et 7B, qui est une coque du type trimaran avec un flotteur principal 10"' comportant, dans la partie inférieure, deux bulbes arrières parallèles entre eux, reliés à la partie supérieure de la coque par deux jambages parallèles 4A et 4B. Cette disposition qui présente les mêmes avantages que la disposition décrite dans le mode de réalisation précédent a l'avantage en outre de réduire la traînée du navire. Comme on le voit sur la figure 7A, le plan de flottaison comporte alors une partie avant 3', des parties minces 4'A et 4'B correspondant aux deux jambages 4A et 4B et deux parties 7' correspondant aux deux flotteurs latéraux.

Outre les avantages qui viennent d'être décrits, la structure de coque de type trimaran, ou plus généralement de type comportant plusieurs flotteurs parallèles délimitant entre eux des tunnels 19, par exemple de type catamaran ou de type pentamaran, présente l'avantage de pouvoir assurer l'échappement des gaz générés par des moyens de production d'énergie tels que des moteurs thermiques, des moteurs diesel, ou des turbines à gaz, dans l'un des tunnels situé entre deux des flotteurs, ce qui permet de dissimuler au moins partiellement ces fumées. En outre, les tunnels peuvent être délimités par des rideaux d'eau 20 constitués de jets d'eau parallèles, verticaux, s'étendant du haut vers le bas, répartis sur toute la largeur des parties avant et des parties arrière des tunnels. Ces rideaux d'eau qui peuvent être réalisés par de l'eau puisée dans l'eau sur laquelle flotte le navire, par exemple de l'eau de mer, éventuellement additionnée d'un polymère qui améliore la viscosité, ont l'avantage de fermer les tunnels et donc de confiner les gaz d'échappement, de faciliter leur refroidissement et leur dissolution dans l'eau. En outre, ils constituent des écrans pour les ondes radar ce qui permet de rendre le navire moins détectables.

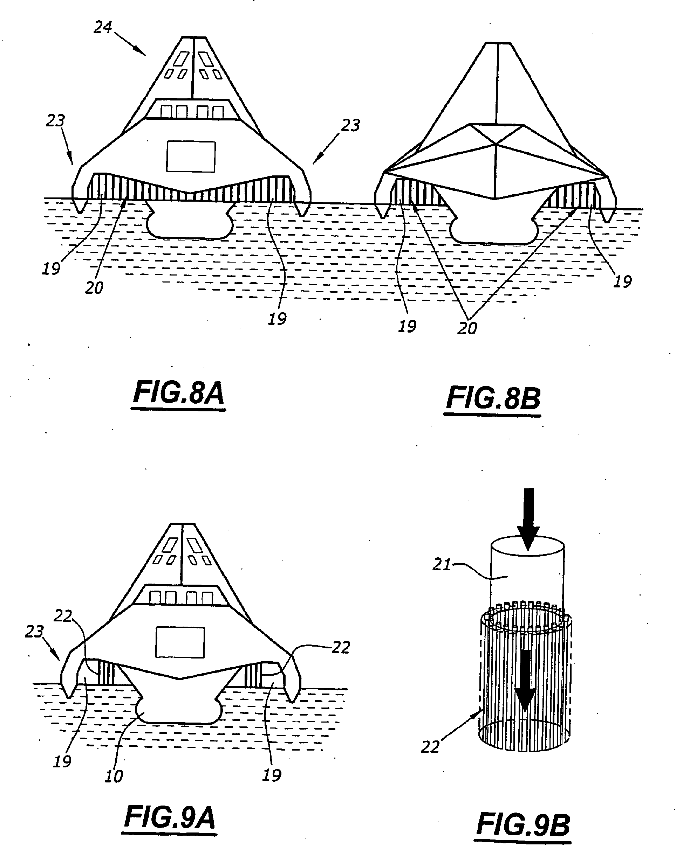

Dans une variante représentée aux figures 9A et 9B, les gaz d'échappement sont évacués dans les tunnels situés de part et d'autre de la coque du flotteur principal 10 par des conduites d'échappement verticales 21 dont les sorties sont entourées de buses qui génèrent des jets d'eau verticaux formant une enveloppe cylindrique 22 autour de chaque jet de gaz qui sort d'une conduite d'échappement 21.

Ces enveloppes cylindriques 22 constituées de jets d'eau canalisent le gaz d'échappement jusqu'à la surface de l'eau sur laquelle le navire flotte et facilitent sa dissolution dans l'eau.

Les coques qui viennent d'être décrites peuvent être réalisées en tout matériau, de préférence en des matériaux légers par exemple en aluminium ou mieux encore en des matériaux composites utilisés en construction navale. Ces matériaux sont par exemple des composites constitués d'une âme en balsa enserrée entre au moins deux couches de composites constitués de fibres de renforcement, par exemple de fibre de verre, noyées dans une résine. De tels matériaux sont connus en eux-mêmes.

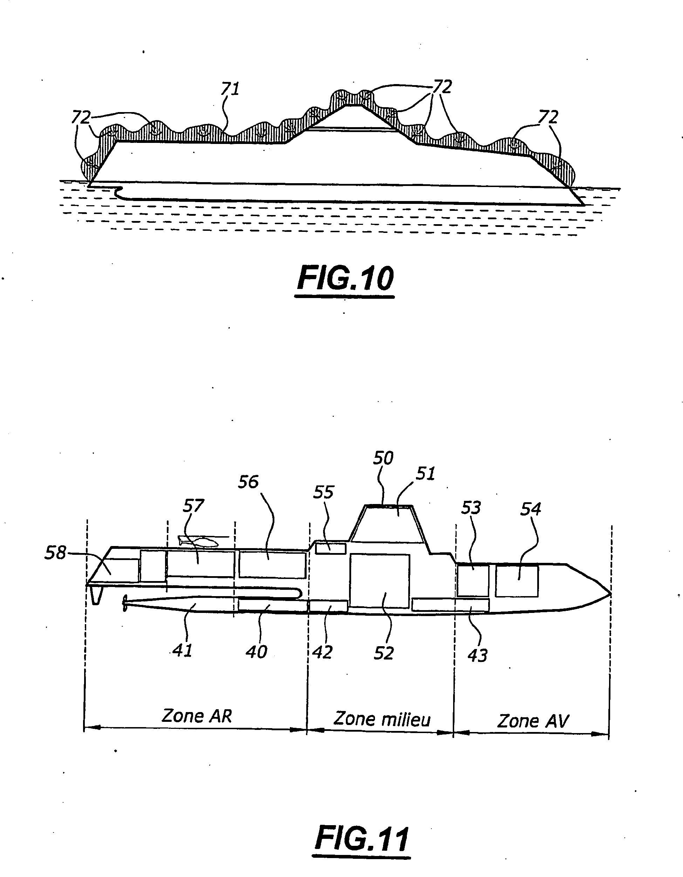

Dans les modes de réalisation qui viennent d'être décrits, en particulier lorsque la coque du navire est du type trimaran, celle-ci a l'avantage de pouvoir avoir des faces latérales, repérées généralement par 23, inclinées vers le haut et vers l'intérieur avec des angles d'inclinaison importants et par exemple supérieurs à 20° à partir de la ligne de flottaison. Une telle disposition a l'avantage de rendre la coque du navire plus difficilement détectable au radar. Comme on l'a indiqué, la coque du navire qui vient d'être décrite permet d'implanter des superstructures importantes et de prévoir des aménagements importants du navire. Un exemple d'un tel aménagement de navire est représenté à la figure 11 sur laquelle on a représenté de façon schématique et en coupe l'organisation des emménagements d'une frégate porte-hélicoptères réalisée à partir d'une coque du type trimaran qui vient d'être décrite.

Comme on peut le voir sur la figure 11, la partie immergée et en particulier le bulbe 40 comporte à la partie arrière des moyens de propulsion 41, dans la partie médiane, des soutes 42, à la partie avant, également des soutes 43. Le navire porte au-dessus de la coque des superstructures 50 comportant une passerelle 51 contenant toutes les salles de conduite des opérations et en dessous de laquelle se trouvent des espaces pour les équipages 52. La passerelle est surmontée d'un radôme qui contient des antennes. La partie avant comporte un premier compartiment machine 53 et encore plus à l'avant, un compartiment 54 contenant des armes pouvant être escamotées sous l'enveloppe générale des superstructures du navire. A la partie arrière, le navire comporte des armes 55 pouvant être escamotées sous l'enveloppe des superstructures et plus à l'arrière encore, un hangar pour hélicoptères 56 puis un compartiment machine 57 et enfin, des soutes ou des hangars 58 permettant d'embarquer par exemple des embarcations qui peuvent être mises à la mer par l'arrière du navire. Le pont du navire est suffisamment vaste pour recevoir un aéronef tel qu'un hélicoptère.

Les faces latérales 23 du flotteur, situées au-dessus de la ligne de flottaison, sont inclinées vers le haut avec des angles qui peuvent dépasser 20° et les parois 24 des superstructures avec des angles de préférence supérieurs à 30°, ce qui le rend particulièrement peu détectable au radar.

Le fait que tous les équipements, que ce soient les armes ou que ce soient les antennes qui se trouvent à l'intérieur du radome de la partie supérieure de la passerelle, sont camouflés rend également le navire particulièrement peu détectable.

Un tel navire trimaran a l'avantage de pouvoir avoir toutes les évacuations de gaz de combustion de ses machines de production d'énergie, situées dans des tunnels sous la coque, qui peuvent être délimités ou confinés par des jets d'eau, comme cela vient d'être décrit. Ceci a l'avantage de rendre le navire particulièrement peu détectable par des moyens de détection thermique.

Afin d'améliorer encore la furtivité du navire, en particulier de le rendre moins détectable par des moyens thermiques ou des moyens visuels, le navire peut être équipé d'un réseau de buses 72 de génération de brouillard qui peuvent être utilisées pour la lutte contre l'incendie mais qui peuvent être également utilisées pour générer un brouillard 71 qui enveloppe les superstructures du navire et les refroidit, ce qui les rend à la fois moins détectables par des moyens de détection thermique, moins détectables par les radars et moins détectables par des moyens visuels, en particulier lorsque l'horizon est un peu brumeux.

Enfin, le navire étant du type trimaran, il comporte des flotteurs latéraux portés par des quilles qui s'étendent vers l'avant et en particulier jusqu'en regard des zones 52 destinées à recevoir l'équipage. Ces quilles latérales peuvent être constituées partiellement par des ballasts qui peuvent être remplis d'eau, en particulier en regard des zones de vie 52. Ces ballasts remplis d'eau ont l'avantage de constituer des blindages relativement efficaces contre par exemple les missiles ou contre des vedettes suicide.

Comme on l'a indiqué, la coque qui vient d'être décrite et qui permet de constituer des navires ayant à la fois un très bonne stabilité et pouvant avoir des aménagements très importants, peut être du type monocoque c'est-à-dire avec un seul flotteur principal, ou du type catamaran c'est-à-dire comportant deux flotteurs principaux parallèles entre eux et délimitant entre eux un tunnel, ou encore toute autre combinaison multicoque, c'est-à-dire comportant un flotteur principal central complété par un ou plusieurs couples de flotteurs latéraux de stabilisation.

Une telle coque peut être utilisée pour réaliser un navire militaire, mais elle peut également être utilisée pour réaliser des navires civils, comme par exemple des navires pour transporter des passagers. Ces navires peuvent être de toute taille et, par exemple, avoir un tonnage de l'ordre de 7000 tonnes.

## Revendications

1. Coque de navire comportant au moins un flotteur (10,10',10", 10"', 7), **caractérisée en ce que** le centre de carène (CB) est en arrière du centre de flottaison (CF) de la coque et la distance entre le centre de carène et le centre de flottaison est supérieur à 0,05 fois la longueur de flottaison (L) de la coque.

2. Coque de navire selon la revendication 1, **caractérisée en ce que** le centre de carène (CB) de la coque est situé au droit de la moitié arrière du plan de flottaison (B1) de la coque, et **en ce que** le centre de flottaison (CF) de la coque est situé dans la moitié avant du plan de flottaison (B1).

3. Coque de navire selon la revendication 1 ou la revendication 2, **caractérisée en ce qu'**elle comprend au moins un flotteur principal (10, 10', 10", 10"') dont le plan de flottaison comporte une partie large (3') à l'avant et une partie effilée (4') à l'arrière de telle sorte que le centre de flottaison (CF) correspondant est situé dans la moitié avant du plan de flottaison, et dont la carène comporte un avant effilé (3) et au moins un bulbe arrière (5), de telle sorte que le centre de carène (CF) du flotteur principal est situé au droit de la moitié arrière du plan de flottaison.

4. Coque de navire selon la revendication 3, **caractérisée en ce que** la carène d'au moins un flotteur principal (10", 10"') comporte deux bulbes arrière (5A, 5B) parallèles entre eux.

5. Coque de navire selon la revendication 3 ou la revendication 4, **caractérisée en ce qu'**elle comprend deux flotteurs principaux parallèles entre eux.

6. Coque de navire selon la revendication 3 ou la revendication 4, **caractérisée en ce qu'**elle comprend, en outre, au moins deux flotteurs de stabilisation latéraux (7).

7. Coque de navire selon la revendication 6, **caractérisée en ce que** chaque flotteur latéral (7) comporte une partie immergée (7') située dans la moitié arrière du navire.

8. Coque de navire selon la revendication 7, **caractérisée en ce que** chaque flotteur latéral (7) comporte une quille (7") qui s'étend vers l'avant de la coque au dessus de la ligne de flottaison, sur au moins les deux tiers de la longueur de la coque, et **en ce que** la longueur de la partie immergée (7') du flotteur latéral est inférieure à la moitié de la longueur totale du flotteur latéral.

9. Coque de navire selon l'une quelconque des revendications 6 à 8, **caractérisée en ce que** au moins un flotteur latéral (7) comprend, en outre, une aile portante (8).

10. Coque de navire selon l'une quelconque des revendications 5 à 9, **caractérisée en ce qu'**elle comporte des parois latérales externes (23) dont au moins les parties situées au-dessus de la ligne de flottaison sont inclinées vers l'intérieur de façon que leurs surfaces extérieures soient orientées vers le haut, l'angle d'inclinaison desdites parois par rapport à la verticale étant supérieur à 20°.

11. Coque selon l'une quelconque des revendications 1 à 10, **caractérisée en ce qu'**elle est constituée de matériaux composites.

12. Navire **caractérisé en ce qu'**il comporte une coque selon l'une quelconque des revendications 1 à 11.

13. Navire selon la revendication 12, **caractérisé en ce que** sa carène comporte au moins un flotteur principal (10) comportant au moins un bulbe arrière (5) dont l'extrémité arrière porte au moins un moyen de propulsion (6).

14. Navire selon la revendication 13, **caractérisé en ce qu'**il comprend au moins deux moyens de propulsion constitués par deux hélices contra rotatives (6A, 6B).

15. Navire selon l'une quelconque des revendications 12 à 14, **caractérisé en ce qu'**it comporte au moins deux flotteurs (7, 10', 10", 10"') parallèles entre eux délimitant un tunnel (19), et **en ce qu'**il comporte au moins un moyen de production d'énergie générant un gaz d'échappement, **en ce que** ledit gaz d'échappement est évacué dans le tunnel délimité par les deux flotteurs et **en ce que** ledit gaz d'échappement est au moins partiellement confiné dans ledit tunnel par au moins un rideau d'eau ou un conduit formé de jets d'eau verticaux (22).

16. Navire selon l'une quelconque des revendications 12 à 15, **caractérisé en ce qu'**il comporte des super structures (2) ayant des parois (24) inclinées vers l'intérieur pour que leurs faces externes soient orientées vers le haut, avec un angle par rapport à la verticale supérieur à 30°.

17. Navire selon l'une quelconque des revendications 12 à 16, **caractérisé en ce que** tous les équipements destinés à être utilisés au dessus de la ligne de flottaison peuvent être dissimulés sous la paroi des super structures.

18. Navire selon l'une quelconque des revendications 12 à 17, **caractérisé en ce qu'**il comporte des moyens (72) pour générer un brouillard d'eau (71) enveloppant ses superstructures.

19. Navire selon l'une quelconque des revendications 12 à 18, **caractérisé en ce qu'**il comporte au moins un flotteur latéral (7) dont au moins une partie constitue un ballast.

20. Navire selon l'une quelconque des revendications 12 à 19, **caractérisé en ce qu'**il est à usage militaire.

## Claims

1. A ship hull comprising at least one float (10, 10', 10", 10"', 7), **characterised in that** the centre of buoyancy (CB) is behind the centre of floatation (CF) of the hull, and the distance between the centre of buoyancy and the centre of floatation is greater than 0.05 times the water line length (L) of the hull.

2. The ship hull according to Claim 1, **characterised in that** the centre of buoyancy (CB) of the hull is located to the right of the rear half of the floatation plane (B1) of the hull, and **in that** the centre of floatation (CF) of the hull is located in the front half of the floatation plane (B1).

3. The ship hull according to Claim 1 or Claim 2, **characterised in that** it comprises at least one main float (10, 10', 10", 10"') the floatation plane of which comprises a broad part (3') at the front and a tapered part (4') at the rear such that the corresponding centre of floatation (CF) is located in the front half of the floatation plane, and the hull of which comprises a tapered front (3) and at least one rear bulb (5) such that the centre of buoyancy (CF) of the main float is located to the right of the rear half of the floatation plane.

4. The ship hull according to Claim 3, **characterised in that** the hull of at least one main float (10", 10"') comprises two rear bulbs (5A, 5B) parallel to one another.

5. The ship hull according to Claim 3 or Claim 4, **characterised in that** it comprises two main floats parallel to one another.

6. The ship hull according to Claim 3 or Claim 4, **characterised in that** it comprises, furthermore, at least two lateral stabilising floats (7).

7. The ship hull according to Claim 6, **characterised in that** each lateral float (7) comprises an immersed part (7') located in the rear half of the ship.

8. The ship hull according to Claim 7, **characterised in that** each lateral float (7) comprises a keel (7") that extends towards the front of the hull above the water line over at least two thirds of the length of the hull, and **in that** the length of the immersed part (7') of the lateral float is shorter than half of the total length of the lateral float.

9. The ship hull according to any of Claims 6 to 8, **characterised in that** at least one lateral float (7) comprises, furthermore, a foil (8).

10. The ship hull according to any of Claims 5 to 9, **characterised in that** it comprises external lateral walls (23) of which at least the parts located above the water line are inclined inwards such that their outer surfaces are directed upwards, the tilting angle of said walls in relation to the vertical being greater than 20°.

11. The hull according to any of Claims 1 to 10, **characterised in that** it is formed from composite materials.

12. A ship, **characterised in that** it comprises a hull according to any of Claims 1 to 11.

13. The ship according to Claim 12, **characterised in that** its hull comprises at least one main float (10) comprising at least one rear bulb (5) the rear end of which carries at least one propulsion means (6).

14. The ship according to Claim 13, **characterised in that** it comprises at least two propulsion means formed by two contra-rotating propellers (6A, 6B).

15. The ship according to any of Claims 12 to 14, **characterised in that** it comprises at least two floats (7, 10', 10", 10"') parallel to one another defining a tunnel (19), and **in that** it comprises at least one means for producing energy generating an exhaust gas, **in that** said exhaust gas is evacuated in the tunnel defined by the two floats, and **in that** said exhaust gas is at least partially confined in said tunnel by at least one water screen or one conduit formed by vertical jets of water (22).

16. The ship according to any of Claims 12 to 15, **characterised in that** it comprises superstructures (2) having walls (24) inclined inwardly so that their external surfaces are directed upwards, with an angle in relation to the vertical of greater than 30°.

17. The ship according to any of Claims 12 to 16, **characterised in that** all of the equipment intended for use above the water line can be concealed beneath the wall of the superstructures.

18. The ship according to any of Claims 12 to 17, **characterised in that** it comprises means (72) for generating a water fog (71) enveloping its superstructures.

19. The ship according to any of Claims 12 to 18, **characterised in that** it comprises at least one lateral float (7) at least one part of which forms a ballast tank.

20. The ship according to any of Claims 12 to 19, **characterised in that** it is for military use.

## Patentansprüche

1. Schiffsrumpf, der wenigstens einen Schwimmkörper (10, 10', 10", 10"', 7) umfasst, **dadurch gekennzeichnet, dass** sich der Schwerpunkt (CB) des unter der Wasserlinie befindlichen Schiffskörpers hinter dem Wasserlinienschwerpunkt (CF) des Rumpfes befindet und dass der Abstand zwischen dem Schwerpunkt des unter der Wasserlinie befindlichen Schiffskörpers und dem Wasserlinienzentrum größer als die 0,05-fache Wasserlinienlänge (L) des Rumpfes ist.

2. Schiffsrumpf nach Anspruch 1, **dadurch gekennzeichnet, dass** sich der Schwerpunkt (CB) des unter der Wasserlinie befindlichen Schiffskörpers des Rumpfes in der hinteren Hälfte der Wasserlinienebene (B1) des Rumpfes befindet und dass sich der Wasserlinienschwerpunkt (CF) des Rumpfes in der vorderen Hälfte der Wasserlinienebene (B1) befindet.

3. Schiffsrumpf nach Anspruch 1 oder Anspruch 2, **dadurch gekennzeichnet, dass** er wenigstens einen Hauptschwimmkörper (10, 10', 10", 10"') umfasst, dessen Wasserlinienebene vorn einen breiten Teil (3') und hinten einen spitz zulaufenden Teil (4) aufweist, derart, dass sich der entsprechende Wasserlinienschwerpunkt (CF) in der vorderen Hälfte der Wasserlinienebene befindet, und dessen unter der Wasserlinie befindlicher Schiffskörper ein spitz zulaufendes vorderes Ende (3) und wenigstens einen hinteren Wulst (5) aufweist, derart, dass sich der Wasserlinienschwerpunkt (CF) des Hauptschwimmkörpers in der hinteren Hälfte der Wasserlinienebene befindet.

4. Schiffsrumpf nach Anspruch 3, **dadurch gekennzeichnet, dass** der unter der Wasserlinie befindliche Schiffskörper wenigstens eines Hauptschwimmkörpers (10", 10"') zwei zueinander parallele hintere Wulste (5A, 5B) umfasst.

5. Schiffsrumpf nach Anspruch 3 oder Anspruch 4, **dadurch gekennzeichnet, dass** er zwei zueinander parallele Hauptschwimmkörper umfasst.

6. Schiffsrumpf nach Anspruch 3 oder Anspruch 4, **dadurch gekennzeichnet, dass** er außerdem wenigstens zwei seitliche Stabilisierungsschwimmkörper (7) umfasst.

7. Schiffsrumpf nach Anspruch 6, **dadurch gekennzeichnet, dass** jeder seitliche Schwimmkörper (7) einen untergetauchten Teil (7') aufweist, der sich in der hinteren Hälfte des Schiffes befindet.

8. Schiffsrumpf nach Anspruch 7, **dadurch gekennzeichnet, dass** jeder seitliche Schwimmkörper (7) einen Schlingerkiel (7") aufweist, der sich über der Wasserlinie auf wenigstens zwei Dritteln der Länge des Rumpfes zur Vorderseite des Rumpfes erstreckt und dass die Länge des untergetauchten Teils (7') des seitlichen Schwimmkörpers kleiner ist als die Hälfte der Gesamtlänge des seitlichen Schwimmkörpers.

9. Schiffsrumpf nach einem der Ansprüche 6 bis 8, **dadurch gekennzeichnet, dass** wenigstens ein seitlicher Schwimmkörper (7) außerdem einen Tragflügel (8) aufweist.

10. Schiffsrumpf nach einem der Ansprüche 5 bis 9, **dadurch gekennzeichnet, dass** er äußere Seitenwände (23) umfasst, wovon wenigstens die über der Wasserlinie sich befindenden Teile nach innen geneigt sind, derart, dass ihre äußeren Oberflächen nach oben orientiert sind, wobei der Neigungswinkel dieser Wände in Bezug auf die Vertikale größer als 20° ist.

11. Rumpf nach einem der Ansprüche 1 bis 10, **dadurch gekennzeichnet, dass** er aus Verbundwerkstoffen gebildet ist.

12. Schiff, **dadurch gekennzeichnet, dass** es einen Rumpf nach einem der Ansprüche 1 bis 11 umfasst.

13. Schiff nach Anspruch 12, **dadurch gekennzeichnet, dass** sein unter der Wasserlinie befindliche Schiffskörper wenigstens einen Hauptschwimmkörper (10) umfasst, der wenigstens einen hinteren Wulst (5) aufweist, dessen hinteres Ende wenigstens ein Vortriebsmittel (6) trägt.

14. Schiff nach Anspruch 13, **dadurch gekennzeichnet, dass** es wenigstens zwei Vortriebsmittel umfasst, die durch zwei in entgegengesetzten Richtungen drehende Schiffsschrauben (6A, 6B) gebildet sind.

15. Schiff nach einem der Ansprüche 12 bis 14, **dadurch gekennzeichnet, dass** es wenigstens zwei zueinander parallele Schwimmkörper (7, 10', 10", 10"') umfasst, die einen Tunnel (19) begrenzen, und dass es wenigstens ein Energieerzeugungsmittel umfasst, das ein Abgas erzeugt, dass das Abgas in den durch die zwei Schwimmkörper begrenzten Tunnel abgeführt wird und dass das Abgas wenigstens teilweise durch wenigstens einen Wasservorhang oder eine Leitung, die durch vertikale Wasserstrahlen (22) gebildet wird, in den Tunnel eingeschlossen wird.

16. Schiff nach einem der Ansprüche 12 bis 15, **dadurch gekennzeichnet, dass** es Aufbauten (2) umfasst, die nach innen geneigte Wände (24) besitzen, damit ihre äußeren Flächen unter einem Winkel in Bezug auf die Vertikale von mehr als 30° nach oben orientiert sind.

17. Schiff nach einem der Ansprüche 12 bis 16, **dadurch gekennzeichnet, dass** alle Ausrüstungen, die dazu bestimmt sind, oberhalb der Wasserlinie verwendet zu werden, unter der Wand der Aufbauten verborgen sein können.

18. Schiff nach einem der Ansprüche 12 bis 17, **dadurch gekennzeichnet, dass** es Mittel (72) umfasst, um einen die Aufbauten umgebenden Wassernebel (21) zu erzeugen.

19. Schiff nach einem der Ansprüche 12 bis 18, **dadurch gekennzeichnet, dass** es wenigstens einen seitlichen Schwimmkörper (7) umfasst, wovon wenigstens ein Teil einen Ballast bildet.

20. Schiff nach einem der Ansprüche 12 bis 19, **dadurch gekennzeichnet, dass** es militärisch genutzt wird.
